# EUROPEAN PATENT SPECIFICATION

(11) **EP 4 339 451 B1**
(45) Date of publication and mention of the grant of the patent: **30.07.2025**
(21) Application number: 22891574.0
(22) Date of filing: 24.08.2022
(51) Int. Cl.: F03D 1/06, B29D 99/00, B29L 31/08

(54) **CONNECTION STRUCTURE FOR WIND TURBINE BLADE SEGMENTS**
VERBINDUNGSSTRUKTUR FÜR WINDTURBINENROTORBLATTSEGMENTE
STRUCTURE DE LIAISON POUR DES SEGMENTS DE PALE D'ÉOLIENNE

(30) Priority: 10.11.2021 CN 202111328543
(43) Date of publication of application: 20.03.2024
(73) Proprietor: Newtech Group Co., Ltd., Changzhou, Jiangsu 213127 (CN)
(72) Inventor: TAN, Kunlun, hangzhou, Jiangsu 213135 (CN); LIU, Yelin, hangzhou, Jiangsu 213135 (CN); BAI, Gaoyu, hangzhou, Jiangsu 213135 (CN); DU, Qiuping, hangzhou, Jiangsu 213135 (CN); CAO, Lei, hangzhou, Jiangsu 213135 (CN); LIU, Shihai, hangzhou, Jiangsu 213135 (CN); WANG, Xiugang, hangzhou, Jiangsu 213135 (CN); CAO, Yichao, hangzhou, Jiangsu 213135 (CN)
(74) Representative: Bayramoglu et al.
(86) International application number: PCT/CN2022/114464
(87) International publication number: WO 2023/082767

(56) References cited:
- WO-A1-2019/226060
- WO-A1-2021/069272
- CN-A- 101 749 181
- CN-A- 108 087 191
- CN-A- 114 183 296
- CN-U- 202 545 134
- US-A1- 2013 129 518
- US-A1- 2015 132 141
- US-A1- 2017 122 287

## Description

### Technical Field

The present invention relates to the field of wind turbine blade technology, in particular to a spanwise segment connection structure for wind turbine blades.

### Background

Wind turbine blades are the basic components of wind turbines that convert wind energy into electrical energy. The blade has the cross-sectional profile of a wing. During operation, the air flowing through the blade creates a pressure difference between its two sides, so that the lift from the pressure side to the suction side acts on the blade, and the lift generates torque on the main rotor shaft, which is connected by gears to a generator that can generate electricity.

In order to make full use of wind energy resources, wind turbines are gradually becoming larger and their blade lengths are also increasing. Rich wind resources are almost located in remote areas, desert areas, offshore or seaside areas and other uninhabited areas with poor transportation conditions, making it quite difficult to transport long blades. At present, some wind turbine blades are segmented along the length direction. However, nowadays, wind turbine blades are becoming increasingly larger and thicker, and segmented along their length direction alone cannot meet transportation conditions.

In the existing modular wind turbine blades, several segments are provided along the length direction, and two adjacent segments are provided with a splicing surface and a connecting structure which passes through the splicing surface for mechanical connection/or hybrid connection with adhesive. However, mechanical and hybrid connections involve metal connections, which can increase the weight of the blades. At the same time, considering lightning protection design, it will inevitably increase the cost beyond the connection.

In view of the above-mentioned problems, the inventor actively carried out research and innovation based on the rich practical experience and professional knowledge in the engineering applications of such products for many years, in order to create a spanwise segment connection structure for wind turbine blades that is more practical. US2017/122287A1 discloses a tip system for a wind turbine blade. The wind turbine blade is formed by joining a tip section and a mainboard section at a joining section, said joining section comprising a scarf joint bonding together a first load-carrying principal laminate integrated in a first aerodynamic shell of said tip section and a second aerodynamic shell with a second load-carrying principal laminate integrated in the second aerodynamic shell of said mainboard section.

### Summary

The technical problem to be solved by the present invention is to provide a spanwise segment connection structure for wind turbine blades in order to achieve the goal of reducing blade weight and cost.

To this end, the present invention provides a spanwise segment connection structure for wind turbine blades, comprising: a first segment and a second segment provided along the length direction of the wind turbine blade, wherein at least one splicing surface, in form of a slope structure, is provided between the first and second segments; and
a structural adhesive layer provided at the splicing surface for splicing and fixing the first and second segments;
wherein the bonding length of the structural adhesive layer conforms to the inclination angle of the slope structure, and a biaxial fabric reinforcement layer is provided on the outer side of a skin interface of the splicing surface; and
two splicing surfaces are provided between the first and second segments, the two splicing surfaces symmetrically arranged and diffusing along the direction toward an outer skin, and a connecting segment is provided between the first and second segments, wherein the connecting segment is bonded and fixed on the splicing surfaces of the first and second segments;
wherein the outer skin of the splicing surface on the first and second segments extends horizontally near one end of an inner skin and fits with the inner skin to form a horizontal butting portion, and the horizontal butting portions of the first and second segments abut each other to form a horizontal portion for fixing the connecting segment.

Further, preferably, an end of the biaxial fabric reinforcement layer smoothly transitions to the outer skin.

Further, preferably, the splicing position of the outer skin of the splicing surface is provided with a slope recess for laying a reinforcing layer therein.

Further, preferably, the first and second segments adopt fiberglass butt joint.

The advantageous effect of the present invention is that the weight of the blade is reduced and the production cost is reduced through the bonding and fixing of the first and second segments. The splicing surface in form of the slope structure provided at the segments of the wind turbine blade along the length direction (span direction) increases the bonding area, reduces the stress concentration on the splicing surface of the first and second segments, and ensures bonding reliability of the first and second segments. In addition, the biaxial reinforcing layer at the skin interface of the splicing surface ensures the uniformity of the force on the blade shell structure, thereby improving the stability of the overall structure of the blade.

### Description of the Drawings

In order to more clearly illustrate the embodiments of the present invention or the technical solutions in the prior art, the accompanying drawings to be used in the description of the embodiments or prior art will be briefly described below. It is obvious that the accompanying drawings in the following description are only some of the embodiments recorded in the present invention, and other accompanying drawings can be obtained according to these accompanying drawings without creative work for those of ordinary skill in the art.
FIG. 1 is a schematic structural diagram of the spanwise segment connection structure for wind turbine blades in Embodiment 1 of the present invention;
FIG. 2 is the slope structure of the splicing surface in Embodiment 1 of the present invention;
FIG. 3 is a partially enlarged view at A in FIG. 1;
FIG. 4 is a partially enlarged view at B in FIG. 1;
FIG. 5 is a schematic structural diagram of the spanwise segment connection structure for wind turbine blades in Embodiment 2 of the present invention;
FIG. 6 is a schematic structural diagram of the spanwise segment connection structure for wind turbine blades in Embodiment 3 of the present invention;
FIG. 7 is a schematic structural diagram of the spanwise segment connection structure for wind turbine blades in Embodiment 4 of the present invention;
FIG. 8 is a partially enlarged view at C in FIG. 7;
FIG. 9 is a schematic structural diagram of the spanwise segment connection structure for wind turbine blades in Embodiment 5 of the present invention; and
FIG. 10 is a partially enlarged view at D in FIG. 9;

Reference signs: 1. First segment; 2. Second segment; 3. Splicing surface; 4. Structural adhesive layer; 5. Biaxial fabric reinforcement layer; 6. Slope recess; 7. Reinforcement layer; 8. Connecting segment; 9. Horizontal portion; 10. Vertical portion; 11. Horizontal butting portion; 12. Fiberglass butt joint; 13. Core material butt joint; 14. Outer skin; 15. Inner skin; 16. Interface.

### Description of the Embodiments

The technical solutions in the embodiments of the present invention will be described clearly and completely in conjunction with the accompanying drawings in the embodiments of the present invention. Obviously, the described embodiments are only a portion of the embodiments of the present invention, rather than all the embodiments.

It should be noted that when an element is referred to as being "fixed to" another element, it can be directly on the element or an intermediate element may also be present. It should be noted that when an element is referred to as being "connected to" another element, it can be directly on the element or an intermediate element may also be present. The terms "vertical", "horizontal", "left", "right" and similar expressions used herein are for illustrative purposes only and do not mean that they are the only modes of implementation.

Unless otherwise defined, all technical and scientific terms used herein have the same meaning as commonly understood by those skilled in the art of the present invention. The terms used herein are for the purpose of describing specific embodiments only and are not intended to limit the invention. The term "and/or" used herein includes any and all combinations of one or more of the related listed items.

### Embodiment 1

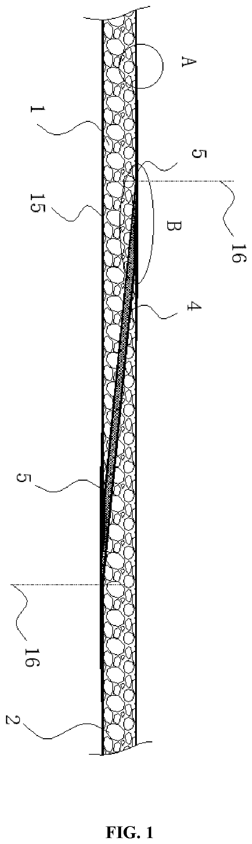

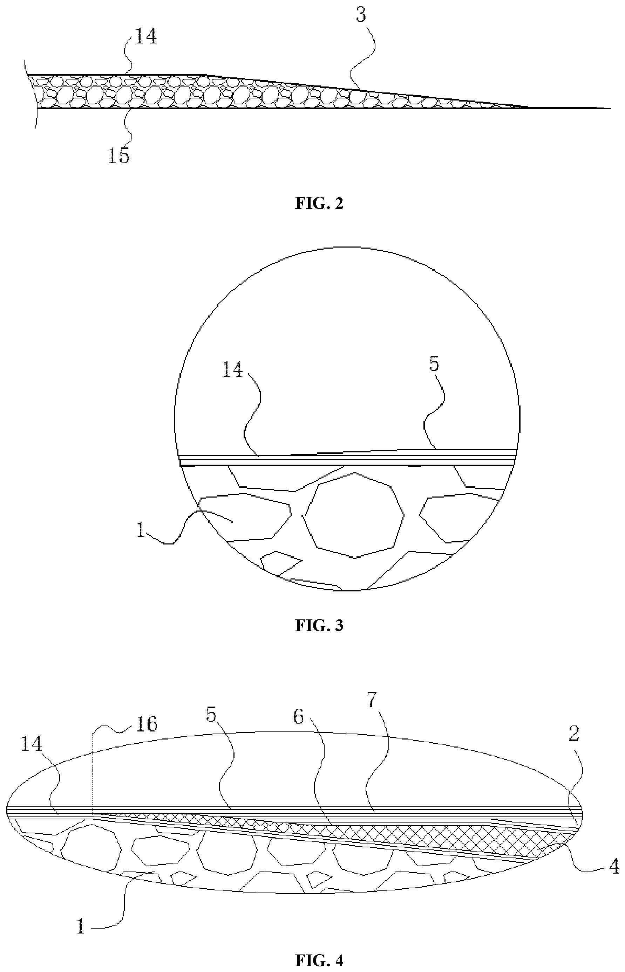

FIGS. 1 to 4 illustrate a spanwise segment connection structure for wind turbine blades, comprising: a first segment 1 and a second segment 2 provided along the length direction of the wind turbine blade, wherein at least one splicing surface 3, in form of a slope structure, is provided between the first and second segments 1, 2; and a structural adhesive layer 4 provided at the splicing surface 3 for splicing and fixing the first and second segments 1, 2; wherein the bonding length of the structural adhesive layer 4 conforms to the inclination angle of the slope structure, and a biaxial fabric reinforcement layer 5 is provided on the outer side of a skin interface 16 of the splicing surface 3. It should be noted that 2 to 4 layers of the biaxial fabric reinforcement layer 5 are provided, with a total thickness exceeding 3 mm. The thickness of the structural adhesive layer 4 at the splicing surface 3 is comprised between 3 mm and 5 mm, and the inclination angle of the slope structure is preferably 6° .

In the present invention, the weight of the blade is reduced and the production cost is reduced through the bonding and fixing of the first and second segments 1, 2. The splicing surface 3 in form of the slope structure provided at the segments of the wind turbine blade along the length direction (span direction) increases the bonding area, reduces the stress concentration on the splicing surface 3, and ensures bonding reliability of the first and second segments 1, 2. In addition, the biaxial reinforcing layer at the skin interface 16 of the splicing surface 3 ensures the uniformity of the force on the blade shell structure, thereby improving the stability of the overall structure of the blade.

After the biaxial reinforcement layer is bonded and cured, an end of the biaxial fabric reinforcement layer 5 smoothly transitions to an outer skin 14 through a grinding process, which reduces stress concentration and influence on aerodynamic performance.

In order to meet the profile tolerance requirements, the interface 16 of the outer skin 14 of the splicing surface 3 is provided with a slope recess 6 for laying a reinforcement layer 7 therein, and the strength of the interface 16 is improved through the reinforcement layer 7.

### Embodiment 2

The difference between this embodiment and Embodiment 1 is that two splicing surfaces 3 are adopted in the present embodiment, and the rest of the structure is the same, which will not be repeated here.

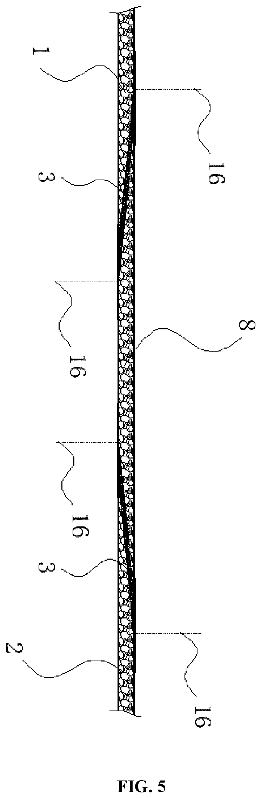

As shown in FIG. 5, two splicing surfaces 3 are provided between the first and second segments 1, 2. The two splicing faces 3 are symmetrically arranged and diffuse along the direction toward the outer skin 14. A connecting segment 8 is provided between the first and second segments 1, 2, and the connecting segment 8 is bonded and fixed on the splicing surfaces 3 of the first and second segments 1, 2. The connecting segment 8 is in form of a trapezoidal structure whose outer side is spliced with the outer skin 14 of the first and second segments 1, 2, and its inner side is spliced with an inner skin 15.

Specifically, the provision of the two splicing surfaces 3 facilitates the control of the accuracy of the connection between the first and second segments 1, 2 to reduce profile tolerances, ensuring the stability of the blade and improving the overall load bearing capacity of the blade.

### Embodiment 3

The difference between this embodiment and Embodiment 2 lies in the shape of the connecting segment 8 and the butt joint structure of the outer skin 14, and the rest of the structures is the same, which will not be repeated here.

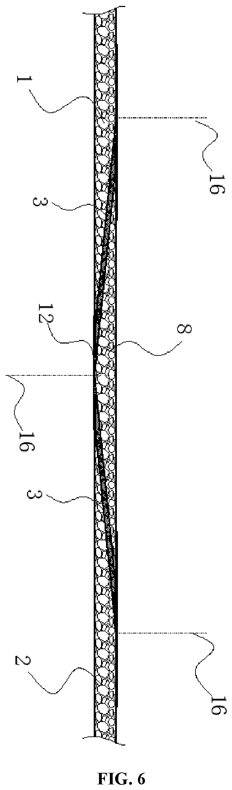

As shown in FIG. 6, two splicing surfaces 3 are provided between the first and second segments 1, 2. The two splicing faces 3 are symmetrically arranged and diffuse along the direction toward the outer skin 14. A connecting segment 8 is provided between the first and second segments 1, 2, and the connecting segment 8 is bonded and fixed on the splicing surfaces 3 of the first and second segments 1, 2. Further, the connecting segment 8 is in form of a triangular structure whose outer surface is spliced with the outer skin 14 of the first and second segments 1, 2.

Specifically, the connection section 8 in the form of triangular structure ensures the accuracy of the connection between the first and second segments 1, 2 and at the same time improves the stability at the interface 16.

Since the tip of the triangular structure faces the inner skin 15 so that the inner skin 15 is bent and butt towards the outer skin 14, it results in a smaller thickness of the core material at the butt joint. In order to increase the connection strength of the inner skin 15, the first and second segments 1, 2 adopt fiberglass butt joint 12 at the interface 16.

### Embodiment 4

The difference between this embodiment and Embodiments 2-3 lies in that a butting surface is added between the two splicing surfaces 3, and the rest of the structure is the same, which will not be repeated here.

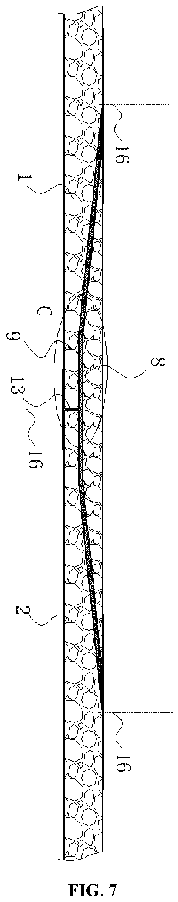

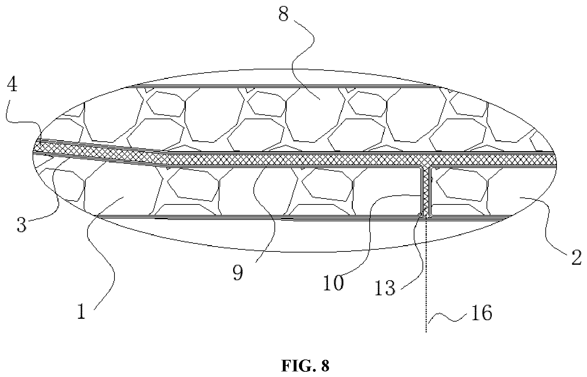

When the first and second segments 1, 2 are relatively thick, a butting surface including a horizontal portion 9 and a vertical portion 10 is provided between the two splicing surfaces3, as shown in FIGS. 7-8. The horizontal portion 9 is bonded and fixed to the connecting segment 8, and the vertical portion at the first segment 1 and the vertical portion at the second segment 2 abut each other and are bonded and fixed with a structural adhesive layer 4.

Specifically, the two symmetrical splicing surfaces 3 and the horizontal portion 9 form a recess into which the connecting segment 8 is overlapped. The connection between the first segment 1 and the second segment 2 is realized by butt joint of the vertical portion 10. The bonding area between the connecting segment 8 and the first and second segments 1, 2 is increased to ensure the strength of the connecting segment 8, thereby improving the overall load bearing capacity of the segmented blades.

The core material at the butt joint of the vertical portion 10 has a certain thickness. In order to simplify the process and facilitate the control of the bonding width, the first segment 1 and the second segment 2 adopt the core material butt joint 13 at the interface 16.

### Embodiment 5

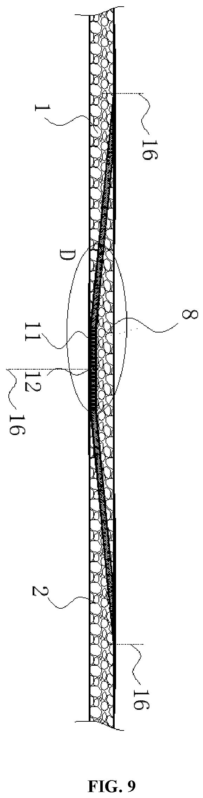

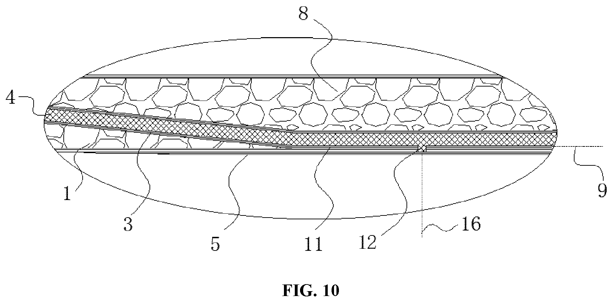

The difference between this embodiment and Embodiment 4 lies in the thickness of the core material at the butt joint and in the form of butt joint. As shown in FIGS. 9-10, the first and second segments 1, 2 extend horizontally near one end of the inner skin 15 and fit with the inner skin 15 to form a horizontal butting portion 11, and the horizontal butting portions of the first and second segments 1, 2 abut each other to form a horizontal portion 9 for fixing the connecting segment 8.

Specifically, the outer skin 14 of the first and second segments 1, 2 fits with the inner skin 15, and fiberglass butt joint 12 is adopted at the interface. The two symmetrical splicing surfaces 3 and the horizontal portion 9 form a recess into which the connecting segment 8 is overlapped to increase the bonding area between the connecting segment 8 and the first and second segments 1, 2, ensuring the strength of the connecting segment 8, thereby improving the overall load bearing capacity of the segmented blades.

## Claims

1. A spanwise segment connection structure for wind turbine blades, comprising:
a first segment (1) and a second segment (2) provided along the length direction of the wind turbine blade, wherein at least one splicing surface (3), in form of a slope structure, is provided between the first and second segments (1, 2); and
a structural adhesive layer (4) provided at the splicing surface (3) for splicing and fixing the first and second segments (1, 2);
wherein the bonding length of the structural adhesive layer (4) conforms to the inclination angle of the slope structure, and a biaxial fabric reinforcement layer (5) is provided on the outer side of a skin interface (16) of the splicing surface (3); and
two splicing surfaces (3) are provided between the first and second segments (1, 2), the two splicing surfaces (3) symmetrically arranged and diffusing along the direction toward an outer skin (14), and a connecting segment (8) is provided between the first and second segments (1, 2), wherein the connecting segment (8) is bonded and fixed on the splicing surfaces (3) of the first and second segments (1, 2);
**characterized in that** the outer skin (14) of the splicing surface (3) on the first and second segments (1, 2) extends horizontally near one end of an inner skin (15) and fits with the inner skin (15) to form a horizontal butting portion (11), and the horizontal butting portions (11) of the first and second segments (1, 2) abut each other to form a horizontal portion (9) for fixing the connecting segment (8).

2. The spanwise segment connection structure for wind turbine blades according to claim 1, wherein an end of the biaxial fabric reinforcement layer (5) smoothly transitions to the outer skin (14).

3. The spanwise segment connection structure for wind turbine blades according to claim 1, wherein the splicing position of the outer skin (14) of the splicing surface (3) is provided with a slope recess (6) for laying a reinforcing layer (7) therein.

4. The spanwise segment connection structure for wind turbine blades according to claim 1, wherein the first and second segments (1, 2) adopt fiberglass butt joint (12).

## Patentansprüche

1. Eine spannweitige Segmentverbindungsstruktur für Windturbinenblätter, bestehend aus:
einem ersten Segment (1) und einem zweiten Segment (2), die entlang der Längsrichtung des Windturbinenblatts vorgesehen sind, wobei zwischen dem ersten und dem zweiten Segment (1, 2) mindestens eine Verbindungsfläche (3) in Form einer Neigungsstruktur vorgesehen ist; und
einer an der Verbindungsfläche (3) vorgesehenen Strukturklebstoffschicht (4) zum Verbinden und Befestigen des ersten und zweiten Segments (1, 2);
wobei die Verbindungslänge der Strukturklebstoffschicht (4) dem Neigungswinkel der Böschungsstruktur entspricht und eine biaxiale Gewebeverstärkungsschicht (5) auf der Außenseite einer Hautschnittstelle (16) der Spleißfläche (3) vorgesehen ist; und
zwischen dem ersten und dem zweiten Segment (1, 2) zwei Verbindungsflächen (3) vorgesehen sind, wobei die beiden Verbindungsflächen (3) symmetrisch angeordnet sind und sich entlang der Richtung zu einer Außenhaut (14) hin erstrecken, und zwischen dem ersten und dem zweiten Segment (1, 2) ein Verbindungssegment (8) vorgesehen ist, wobei das Verbindungssegment (8) auf die Verbindungsflächen (3) des ersten und des zweiten Segments (1, 2) geklebt und befestigt ist;
**dadurch gekennzeichnet, dass** die Außenhaut (14) der Verbindungsfläche (3) an dem ersten und dem zweiten Segment (1, 2) horizontal in der Nähe eines Endes einer Innenhaut (15) verläuft und mit der Innenhaut (15) zusammenpasst, um einen horizontalen Stoßabschnitt (11) zu bilden, und dass die horizontalen Stoßabschnitte (11) des ersten und des zweiten Segments (1, 2) aneinander stoßen, um einen horizontalen Abschnitt (9) zum Befestigen des Verbindungssegments (8) zu bilden.

2. Die spannweitige Segmentverbindungsstruktur für Windturbinenblätter nach Anspruch 1, wobei ein Ende der Gewebeverstärkungslage (5) glatt in die Außenhaut (14) übergeht.

3. Die spannweitige Segmentverbindungsstruktur für Windturbinenblätter nach Anspruch 1, wobei die Spleißposition der Außenhaut (14) der Spleißfläche (3) mit einer Böschungsausnehmung (6) zur Unterbringung einer Verstärkungslage (7) versehen ist.

4. Die spannweitige Segmentverbindungsstruktur für Windturbinenblätter nach Anspruch 1, wobei das erste und das zweite Segment (1, 2) eine Glasfaser-Stoßverbindung (12) aufweisen.

## Revendications

1. Structure de connexion de segments dans le sens de l'envergure pour pales d'éoliennes, comprenant :
un premier segment (1) et un deuxième segment (2) disposés dans la direction de la longueur de la pale d'éolienne, dans lesquels au moins une surface d'épissure (3), sous la forme d'une structure de pente, est prévue entre le premier et le deuxième segment (1, 2) ; et
une couche adhésive structurelle (4) prévue à la surface d'épissure (3) pour l'épissage et la fixation des premier et deuxième segments (1, 2) ;
dans laquelle la longueur de liaison de la couche adhésive structurelle (4) s'adapte à l'angle d'inclinaison de la structure de pente, et une couche de renfort de tissu biaxiale (5) est prévue sur le côté extérieur d'une interface de peau (16) de la surface d'épissure (3) ; et
deux surfaces d'épissure (3) sont prévues entre le premier et le deuxième segment (1, 2), les deux surfaces d'épissure (3) étant disposées symétriquement et diffusant le long de la direction vers une peau extérieure (14), et un segment de liaison (8) est prévu entre le premier et le deuxième segment (1, 2), dans lequel le segment de liaison (8) est collé et fixé sur les surfaces d'épissure (3) des premier et deuxième segments (1, 2) ;
**caractérisé en ce que** la peau extérieure (14) de la surface d'épissure (3) sur les premier et deuxième segments (1, 2) s'étend horizontalement près d'une extrémité d'une peau intérieure (15) et s'adapte à la peau intérieure (15) pour former une partie d'aboutement horizontale (11), et les parties d'aboutement horizontales (11) des premier et deuxième segments (1, 2) s'atbutent l'une l'autre pour former une partie horizontale (9) de fixation du segment de liaison (8).

2. Structure de connexion de segments dans le sens de l'envergure pour pales d'éoliennes selon la revendication 1, dans laquelle une extrémité de la couche de renfort de tissu biaxial (5) passe en douceur à la peau extérieure (14).

3. Structure de connexion de segments dans le sens de l'envergure pour pales d'éoliennes selon la revendication 1, dans laquelle la position d'épissure de la peau extérieure (14) de la surface d'épissure (3) est pourvue d'un évidement de pente (6) pour y poser une couche de renforcement (7).

4. Structure de connexion de segments dans le sens de l'envergure pour pales d'éoliennes selon la revendication 1, dans laquelle les premier et deuxième segments (1, 2) adoptent un joint bout à bout en fibre de verre (12).
